# EUROPEAN PATENT APPLICATION

(11) **EP 1 528 470 A1**
(43) Date of publication of application: **04.05.2005**
(21) Application number: 04105132.7
(22) Date of filing: 18.10.2004
(51) Int. Cl.: G06F 11/14, G06F 9/445

(54) **Data Backup And Recovery**

(30) Priority: 31.10.2003 GB 3254489
(71) Applicant: Hewlett-Packard Development Company, L.P., Houston, TX 77070 (US)
(72) Inventor: Evans, Rhys Wyn, CF23 5QP, Caerdydd (GB); Slater, Alastair Michael, SN16 9LL, Malmesbury (GB); Wakelin, Duncan, BS7 9HR, Bristol (GB)
(74) Representative: Marsh, David John

(57) **Abstract**

A method of sequentially transferring boot-image data comprising:
- causing first boot-image data to be transferred to a tape medium starting at a first offset,
- causing second boot-image data to be transferred to the tape medium starting at a second offset,
- causing data relating to the first and second offsets to be transferred to a non-volatile memory.

## Description

### Field of the invention

The present invention relates to the field of data backup and recovery.

### Background and prior art

It is known to backup data stored on primary storage, such as a hard disk, of a computer system in order to protect against a disaster that might otherwise irrecoverably destroy all or part of the data. Disasters for example may be fire, flood, computer virus or simply accidental deletion of data. One of the main reasons for using magnetic tape as the backup storage medium is that it provides a stable, reliable and relatively cheap option for storing large volumes of backed-up data.

Backup application software which executes on the computer system typically provides the functions for enabling such computer system data to be both backed-up to, and restored from, tape media, which is written to and read from by a tape drive. Well-known backup application software includes 'Replica™' from Stac, 'ArcServe™' from Computer Associates, 'BackupExec™' from Veritas and Data Protector™' from HP. Well-known tape drives include DDS™ and LTO™ compliant tape drives, both available from HP.

In the event of a disaster, such as hard disk failure or even system destruction, typically, a priority is to rebuild a working system as soon as possible. This requires the computer hardware to be restored to the same state as it was before the disaster, which can take hours or even days, even before the file system can be restored. Generally, a significant amount of human intervention is required to complete this process.

In order to reduce the time and human intervention overhead of restoring a computer system after a disaster a backup application software provides a so-called disaster recovery (DR) solution, which enables a computer system to be restored in an expedited manner to a state which existed before a disaster occurred. Such a scheme typically involves at least installing and configuring a minimal operating system, tape drivers and the backup application software (or the requisite parts thereof) itself.

Known DR solutions typically require a user to generate a set of DR floppy disks. The DR floppy disks may be used to boot the computer system, when it is not possible to boot from the hard disk drive, and execute application software for recovering a backed-up copy of the file system from tape media. The DR floppy disks typically load and execute a minimal version of the operating system along with components of application software comprising DR functionality, thus providing sufficient functionality, for example, for the computer to build new disk partitions, access a tape drive and restore the data from tape media.

The DR operating system is required to reflect the exact hardware configuration of the computer system on which it is to be installed, otherwise it would not be possible to communicate with storage devices such as tape drives.

Typically, therefore, DR floppy disks need to be regenerated by a user whenever the system hardware configuration changes, and particularly when a SCSI (Small Computer Systems Interface) configuration changes. For example, if a new SCSI Host Bus Adaptor (HBA) is added to a server, with a respective new device driver, this device driver needs to be added to the DR floppy disks so that the new SCSI HBA is recognised when rebuilding the computer system.

A reason why DR floppy disks are used is that a floppy disk drive is one of the standard 'initial program load devices' (IPLD), which practically every PC is configured to 'boot' from. Herein, 'standard' as applied to an IPLD, implies that the PC is physically programmed to recognise the device for the purposes of booting. Currently, other standard IPLDs, sometimes known as BAIDS (BIOS Aware Initial Program Load Devices), include the first hard disk drive in a PC and, more recently, the first CD-ROM drive in a PC. Generally, however, an IPLD can be virtually any device that has the ability to load and execute a PC operating system.

It is known to boot from a CD-ROM drive, as long as the CD-ROM complies with the ISO 9660 CD-ROM standard, as extended by the 'El Torito' Bootable CD-ROM Format Specification, Version 1.0, January 25, 1995, created jointly by IBM Corporation and Phoenix Technologies Ltd.

The 'El Torito' bootable CD-ROM Format Specification provides the ability to catalogue boot images and to selectively boot from any single image stored on a CD-ROM. A BIOS with multiple boot-image capability can access any one of a number of bootable disc images listed in the booting catalogue stored on the CD-ROM. The booting catalogue is a collection of 20 byte entries including a validation entry, an initial/default entry, a section entry, and section entry extension. The booting catalogue allows a computer system to pick a proper boot image and then to boot from the selected image.

Booting from CD-ROM in a similar manner is also considered in detail in US 5,727,213. As described, to boot from CD-ROM, a PC's BIOS (basic input/output system) needs to specifically support reading boot record data from a CD-ROM, typically, as well as from a floppy disk or hard disk. US 5,727,213 also proposes that tape media may also serve as a boot source, subject to the PC BIOS being modified to detect and read boot record data from a tape media. To date, however, PC BIOS standards do not support booting from tape media.

In a system which is bootable from a CD-ROM, US 5,727,213 specifies that, to read boot record data from a CD-ROM, read commands directed to the floppy disk drive need to be re-directed to the CD-ROM drive during a read data part of the boot process. In addition, a modified SCSI driver of the PC needs to convert the 512 byte sectors conventionally used by hard disk and floppy disk into 2 Kbytes sectors conventionally used by a CD-ROM drive.

In view of the possibility of booting from CD-ROM, it would obviously also be possible to generate one or more DR CD-ROMs to replace the DR floppy disks. However, there would be little advantage in adopting this approach, and a significant cost increase. In particular, it would still be onerous for the user to have to generate, maintain and keep safe the DR CD-ROMs.

WO00/08561 the entirety of which is herein incorporated by reference shows a tape drive configured to operate as a bootable device for a PC. The tape drive has two modes of operation: the first mode in which it operates as a normal tape drive and the second in which it emulates a bootable CD-ROM drive.

Firmware provides both the normal mode of operation, in which the tape drive behaves as a tape drive, and the disaster recovery (DR) mode of operation, in which the tape drive is arranged to emulate a CD-ROM drive. The CD-ROM drive emulation is achieved in part by configuring the tape drive to identify itself to the PC as a CD-ROM drive. With the ability to emulate a CD-ROM drive, the tape drive can act as an 'initial program load device' (IPLD).

Whether the tape drive operates in normal mode or DR mode is determined by user selection. The user selection of mode may be performed without the need for any additional tape drive hardware by using the tape drive eject button; when the tape drive is powered on the eject button held down, the DR mode of operation is selected, otherwise the normal mode is selected.

This selection function is achieved by the tape drive's firmware that checks the status of the eject button during a power-on self-test sequence. Alternatively, DR mode can be selected by holding the eject button down for a long time period (such as 5 seconds), when the tape drive is already powered on, by the firmware which checks the length of the period the eject button is held down to determine whether the operation is an eject or the user selecting DR mode.

### Summary of the invention

The present invention provides a method of sequentially transferring boot-image data to a sequential secondary storage device. The method comprises tranferring the first boot-image data to the tape medium starting at a first offset and transferring the second boot-image data to the tape medium starting at a second offset, and storing first and second offset data in non-volatile memory. This way storage of multiple boot-images on a single tape medium is facilitated.

In accordance with a preferred embodiment of the invention the tape medium is a tape medium. For example a tape cartridge which is compliant with ULTRIUM LTO is utilised. Such tape cartridges are commercially available from Hewlett Packard (www.hp.com/go/ultrium). A LTO compliant tape cartridge has a non-volatile cartridge memory (LTO-CM) which is an intelligent memory chip embedded in the cartridge. It uses a radio frequency interface that eliminates the need for a physical power or signal connection between cartridge and tape drive. The LTO-CM is used for storing information which in other tape formats may be stored in the header at the beginning of the tape.

In accordance with a preferred embodiment of the invention the first and second offset data is stored on the tape itself. Alternatively the first and second offset data is stored in a cartridge memory, such as a LTO-CM.

In accordance with a further preferred embodiment of the invention an index for mapping boot image identifiers to respective offsets is stored in the non-volatile memory. This index facilitates provision of a booting catalogue for selection of one of the boot-images.

Another aspect of the present invention is a method of providing boot-image data to a computer, such as for the purpose of disaster recovery. This is accomplished by reading the at least first and second offset data from the non-volatile memory and emulation of an optical storage device. The emulation provides booting catalogue data on the basis of the first and second offset data for selection of one of the bootable images.

In accordance with a preferred embodiment of the invention the emulation of the optical storage device is started in response to an external command. The external command may originate from a computer system coupled to the tape drive through a network or by means of a user input operation, such as operating a button on the tape drive.

In accordance with a further preferred embodiment of the invention the emulation of the optical storage device is performed permanently. Preferably one port of the tape drive is coupled to the emulated optical storage device while another port is used for communicating with the tape drive in normal mode.

### Brief description of the drawings

In the following various embodiments of the invention will be described, by way of example only, and with reference to the drawings in which:
- Figure 1: is a schematic block diagram showing a tape drive coupled to multiple computer systems,
- Figure 2: is a flow diagram illustrating steps involved in storing a boot image on tape media,
- Figure 3: is illustrative of an index that is stored on the tape media or on a cartridge memory,
- Figure 4: is a flow diagram illustrating the steps involved in booting from the tape drive,
- Figure 5: is a schematic block diagram of a tape drive apparatus having a dedicated port for permanent CD-ROM emulation.

### Detailed description

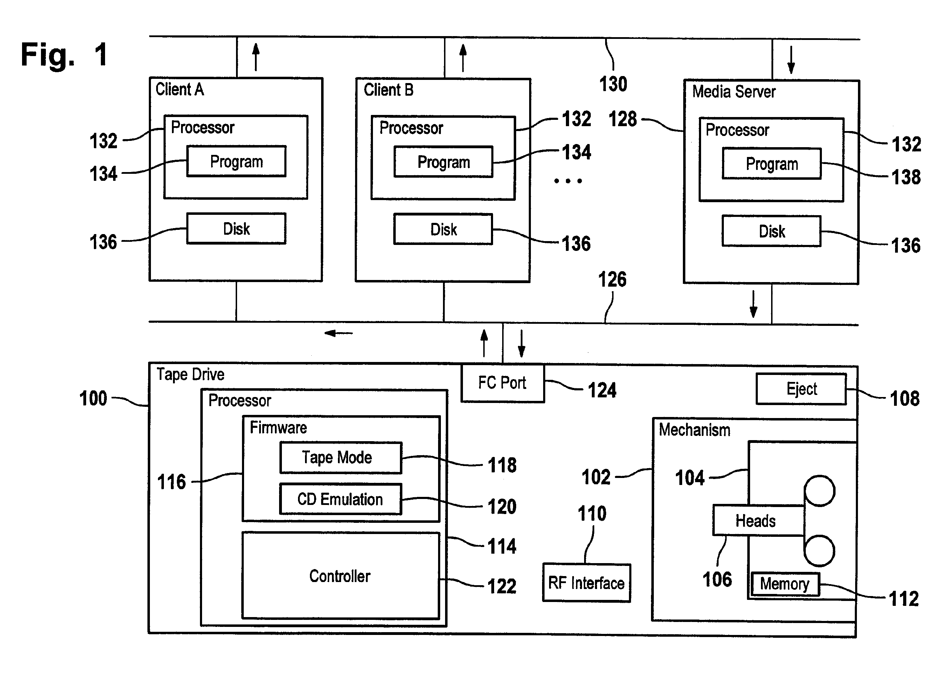

Figure 1 shows tape drive 100 having tape mechanism 102, which loads and ejects tape media 104 and winds the tape media 104 forwards or backwards as required for reading and writing data. In a DDS (Digital Data Storage) tape drive, the read/write heads 106 are mounted on a helical scanning drum, which rotates to sweep the heads past the tape in a motion oblique to the direction of travel of the tape. Tape drive apparatus 100 has eject button 108 and RF interface 110 that serves to communicate with cartridge memory 112 of tape media 104.

Processor 114 of tape drive 100 serves to execute firmware 116. Firmware 116 comprises instructions 118 for providing the normal mode of operation in which the tape drive 100 behaves as a tape drive and instructions 120 for providing the disaster recovery mode of operation, in which the tape drive emulates a CD-ROM drive.

Further processor 114 runs control program 122 which controls operation of tape drive 100.

Tape drive 100 has port 124. In the example considered here port 124 is compliant with the fibre channel (FC) standard.

Port 124 is coupled to storage area network (SAN) 126.

Client computers A, B,... are coupled to media server computer 128 through Ethernet network 130. Each one of the client computers has processor 132 for running a backup application program 134 in order to read data stored on local disk 136 and send the data over Ethernet network 130 to media server 128 for the purpose of performing the data backup operation. Media server 128 runs program 138 on its processor 132 for formatting data received from the client computers A, B, ... via Ethernet network 130. During backup program 138 creates boot-images for the local disks 136 of client computers A, B, ... and transmits the corresponding boot-image data sets via storage area network 126 to tape drive 100.

In operation tape drive 100 is initially in the normal mode of operation, i.e. tape drive 100 behaves as a tape drive at port 124. When tape drive 100 receives boot-image data of e.g. client computer A from media server 128 via storage area network 126 at its port 124 it performs an append operation in order to store the boot-image data on tape media 104.

In other words the boot-image data of client computer A is stored on tape media 104 starting at a specific tape location (offset) that is identified by offset data. The offset data is stored on the tape itself or in cartridge memory 112 by means of RF interface 110. This process can be performed repeatedly for all client computers which are coupled to media server computer 128.

Each time a new boot-image is received at port 124 an append operation is performed, the boot-image data is stored on tape media 104, and the offset data that identifies the tape location where the corresponding recording of the boot-image data starts is stored in non-volatile memory. This way multiple boot-image data can be stored on tape media 104. This has the advantage that more efficient use can be made of tape media 104.

In order to perform a disaster recovery operation, such as for client computer A, a replacement client computer A' is coupled to storage area network 126. Tape drive 100 is put into the disaster recovery mode. This can be done by pressing eject button 108 when tape drive 100 is powered-on or by pressing the eject button 108 for a long time period when the tape drive 100 is already powered on.

In the disaster recovery mode a CD-ROM emulation is provided by instructions 120 such that tape drive 100 behaves like a CD-ROM drive at port 124. Instructions 120 read the offset data stored in non-volatile memory, i.e. cartridge memory 112 or the tape itself, in order to generate a booting catalogue.

On the basis of the booting catalogue the BIOS of the replacement client computer A' can select the appropriate bootable disk image. The corresponding boot-image data is read from tape media 104 and transferred to client computer A' via storage area network 126. Preferably the emulation performed by instructions 120 is in compliance with the 'El Torito' bootable CD-ROM Format Specification. In this instance instructions 120 generate a multiple boot-image configuration on the basis of the offset data stored in cartridge memory 112 that has a format as specified in the 'El Torito' specification.

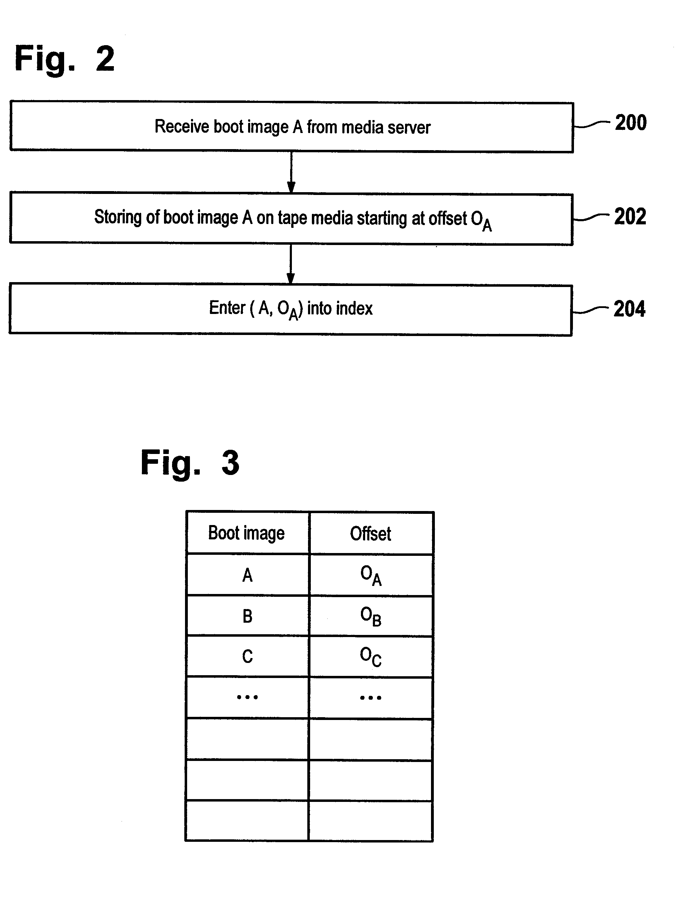

Figure 2 illustrates an append operation of an additional boot-image received from one of the client computers. Without limitation of generality it is assumed that boot-image A of client computer A is received by the tape drive from the media server computer in step 200. In step 202 the tape drive performs an append operation and stores the boot-image A on the tape media starting at an offset O_{A}. The corresponding offset data O_{A} is indicative of the position where the recording of the boot-image A on the tape media starts.

In step 204 the tuple consisting of the identifier A of the boot-image A of client computer A and the offset data O_{A} is entered into the index stored on the tape media itself or on the cartridge memory.

When the tape drive receives another boot image from another client computer or the same client computer, steps 200 to 204 are performed again with respect to the additional boot image.

Figure 3 schematically shows a resulting index which maps the boot image identifiers A, B, C, ... to respective offsets O_{A}, O_{B}, O_{C}, ...

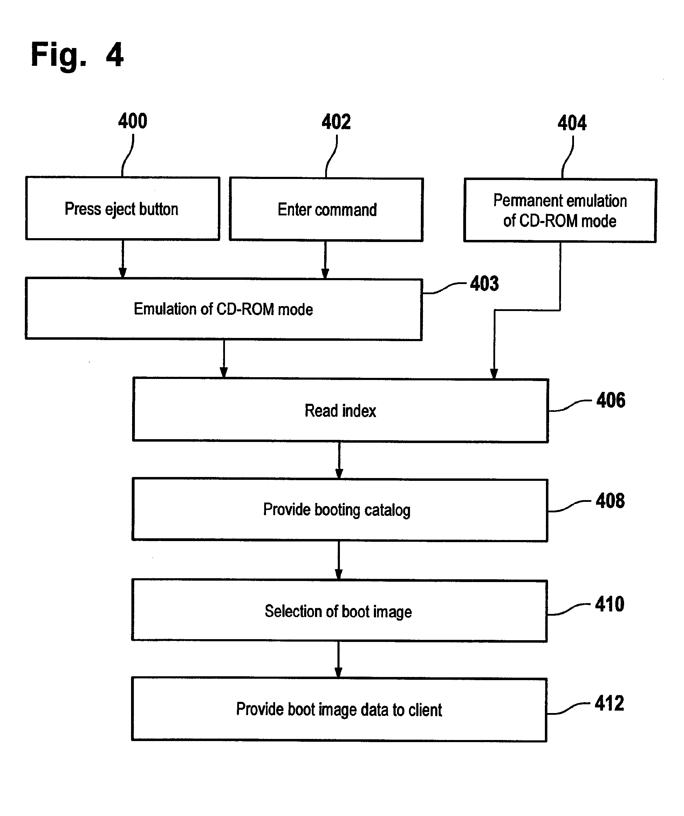

Figure 4 shows a flow chart for performing a restore operation, such as for the purpose of disaster recovery or migration. First the tape drive needs to be put into a CD-ROM mode (step 403). This can be done by pressing the eject button of the tape drive when the tape drive is powered on (step 400). Alternatively a command is sent from one of the client computer systems or from the media server computer to the tape drive in order to put the tape drive into the CD-ROM emulation mode. For example if client computer A is replaced by client computer A' for the purpose of disaster recovery a command can be sent from client computer B or from the media server to the tape drive in order to start the CD-ROM emulation (step 402).

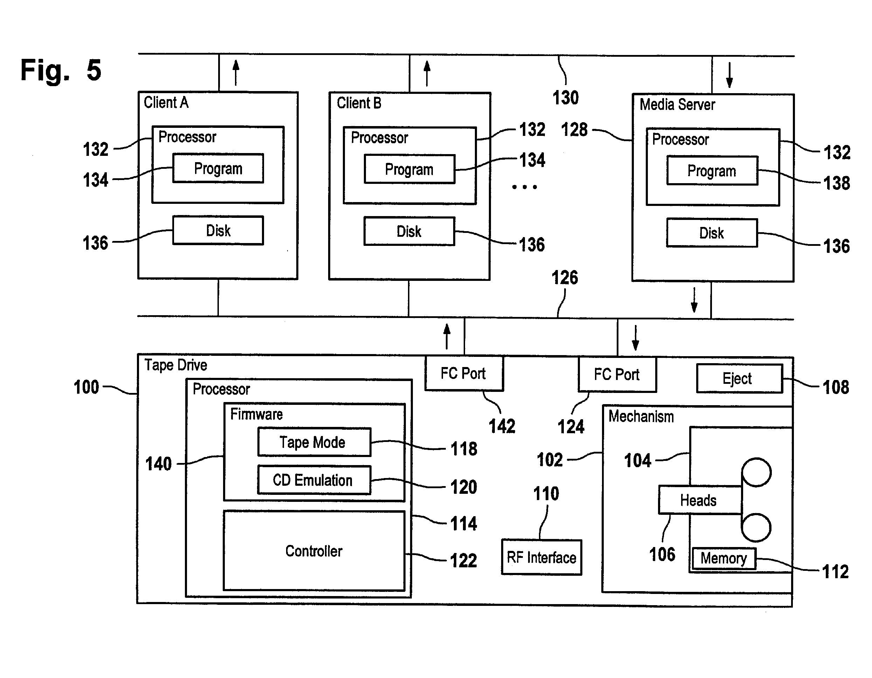

Alternatively the CD-ROM mode is permanently emulated by the tape drive. In this instance an extra physical port can be coupled to the permanent CD-ROM emulation or the CD-ROM emulation provides a logical unit (LUN) that is associated with a single physical port. A suitable embodiment of such a tape drive will be explained in more detail below with reference to figure 5.

In step 406 the index (cf. figure 3) is read from non-volatile memory, e.g. from the tape media itself or from the cartridge memory. On the basis of the boot-image identifiers and respective offset data of the index a booting catalogue is provided in step 408. Preferably the booting catalogue is in compliance with the 'El Torito' Specification.

In step 410 the BIOS of the replacement computer, e.g. client computer A', selects one of the boot images from the booting catalogue, for example in accordance with the El Torito specification. The selected boot image is provided to the replacement client computer A' such that it can boot from the tape drive.

Figure 5 shows a further preferred embodiment of a tape drive. Elements of figure 5 that correspond to elements of figure 1 are designated by the same reference numerals.

In contrast to the embodiment of figure 1, tape drive 100 of figure 5 has firmware 140 that permanently provides the tape mode by executing instructions 118 and that permanently provides a CD-ROM emulation by execution of instructions 120. Tape drive 100 has additional fibre channel port 142. Port 142 is coupled to the permanent CD-ROM emulation provided by instructions 120 whereas port 124 serves for communication with tape drive 100 in the tape mode provided by instructions 118. As a consequence it is not necessary to change the mode of operation of tape drive 100 when a disaster recovery is to be performed as tape drive 100 permanently 'looks' like a CD-ROM drive at its port 142 from where the replacement computer system can boot.

### List of reference numerals

- 100: tape drive
- 102: tape mechanism
- 104: tape media
- 106: heads
- 108: eject button
- 110: RF interface
- 112: cartridge memory
- 114: processor
- 116: firmware
- 118: instructions
- 120: instructions
- 122: program
- 124: port
- 126: storage area network
- 128: media server computer
- 130: Ethernet network
- 132: processor
- 134: backup application program
- 136: local disk
- 138: programme
- 140: firmware
- 142: port

## Claims

1. A method of sequentially transferring boot-image data comprising:
- causing first boot-image data to be transferred to a tape medium (104) starting at a first offset,
- causing second boot-image data to be transferred to the tape medium starting at a second offset,
- causing data relating to the first and second offsets to be transferred to a non-volatile memory (104; 112).

2. The method of claim 1, the tape medium being compliant with the ULTRIUM format.

3. The method of claim 1 or 2, the non-volatile memory being the tape medium (104).

4. The method of claim 1 or 2, the non-volatile memory being a cartridge memory (112) of the tape medium.

5. The method of any one of claims 1 to 4, wherein the data transferred to non-volatile memory comprises first and second identifying data respectively associated with the first and second boot image data.

6. A method of providing boot-image data to a computer for booting the computer, the method comprising:
- reading at least first and second offset data relative to respective first and second boot-image data from a non-volatile memory (104; 112), the first and second boot-image data being stored on a tape medium (104),
- emulating an optical storage device,
- using the first and second offset data for selecting of one of the first and second boot-image data, and outputting the selected one of the first and second boot-image data for booting the computer.

7. The method of claim 6, further comprising providing booting catalogue data on the basis of the first and second offset data.

8. The method of claim 6 or 7, further comprising receiving a command and starting the emulation of the optical storage device in response to the command.

9. The method of claim 8, wherein the command is received from a second computer.

10. The method of any one of claims 6 to 9, further comprising starting the emulation of the optical storage device in response to a user input operation.

11. The method of claim 10, wherein the user input operation consists of operating an eject button.

12. The method of any one of claims 6 to 11, wherein the emulation of the optical storage device is performed permanently.

13. The method of any one of claims 6 to 12, wherein a dedicated port (142) is coupled to the emulation of the optical storage device.

14. A computer program product for controlling a secondary sequential storage device (100), the computer program product comprising instructions (116) for causing
- transfer of first boot-image data to a tape medium (104) starting at a first offset,
- transfer of second boot-image data to the tape medium starting at a second offset,
- transfer of first and second offset data to non-volatile memory (104; 112).

15. The computer program product of claim 14, the instructions being adapted to store first and second identifiers of respective first and second boot-image data in a non-volatile memory (112) for creation of an index relating the first and second identifiers to respective first and second offset data.

16. A computer program product for controlling a secondary sequential storage device (100), the computer program product comprising instructions (116) for:
- reading at least first and second offset data of respective first and second boot-image data from a non-volatile memory (104; 112), the first and second boot-image data being stored on a tape medium (104),
- emulating an optical storage device,
- using the first and second offset data for enabling selection of one of the first and second boot-image data, and
- outputting the selected one of the first and second boot-image data for booting the computer.

17. The computer program product of claim 16, the instructions being responsive to receiving an external command to start the emulation of the optical storage device.

18. The computer program product of claim 16 or 17, the instructions being responsive to a user input operation to start the emulation of the optical storage device.

19. The computer program product of claim 18, the user input operation comprising operating an eject button (108) of the sequential secondary storage device.

20. The computer program product of any one of claims 16 to 19, the instructions being adapted to permanently emulate the optical storage device.

21. A secondary storage device for storing boot-image data on a tape medium (104), the secondary storage device comprising:
- means (124) for receiving at least first and second boot-image data,
- means (118) for writing the first and second boot-image data starting at respective first and second offsets on the tape medium,
- means (118, 106; 110) for storing first and second offset data in non-volatile memory.

22. The secondary storage device of claim 21, the means for storing the first and second offsets being adapted to store an index in the non-volatile memory for mapping respective first and second identifiers, respectively relating to the first and second boot-image data, to the respective first and second offset data.

23. The secondary storage device of claim 21 or 22, further comprising a wireless interface (110) for storing the first and second offset data in the non-volatile memory.

24. The secondary storage device of claim 21, 22 or 23, further comprising emulation means (120) for emulating an optical storage device.

25. The secondary storage device of any one of claims 21 to 24 having a port (142) permanently assigned to the emulation means.

26. The secondary storage device of any one of claims 21 to 25, comprising a tape drive (100).

27. A non-volatile memory component comprising firmware for controlling a transfer device (100), the firmware comprising instructions (140) for:
- transferring first boot-image data to a tape medium (104) starting at a first offset,
- transferring second boot-image data to the tape medium starting at a second offset,
- transferring first and second offset data relating to the first and second offsets in non-volatile memory (104; 112).

28. A non-volatile memory component comprising firmware for controlling a transfer device (100), the firmware comprising instructions (140) for:
- reading at least first and second offset data of respective first and second boot-image data from a non-volatile memory (104; 112), the first and second boot-image data stored on a tape medium (104),
- emulating an optical storage device,
- providing booting catalogue data on the basis of the first and second offset data for selecting of one of the first and second boot-image data, transferring of the selected one of the first and second boot-image data to the computer.

29. A tape cartridge comprising a tape medium (104) having stored thereon at least first and second boot-image data.

30. The tape cartridge of claim 29 having a non-volatile memory (104; 112) storing first and second offset data relating to the first and second offsets.
